# EUROPÄISCHE PATENTANMELDUNG

(11) **EP 3 907 965 A1**
(43) Veröffentlichungstag der Anmeldung: **10.11.2021**
(21) Anmeldenummer: 21156563.5
(22) Anmeldetag: 11.02.2021
(51) Int. Cl.: H04L 29/06, A01B 59/042, G05D 1/02

(54) **LANDWIRTSCHAFTLICHES ASSISTENZSYSTEM**

(30) Priorität: 06.05.2020 DE 102020112297
(71) Anmelder: CLAAS Tractor S.A.S., 78141 Vélizy-Villacoublay Cedex (FR)
(72) Erfinder: Ehlert, Christian, 33719 Bielefeld (DE); Wieckhorst, Jan Carsten, 29525 Uelzen (DE); Birkmann, Christian, 33775 Versmold (DE); Meyer, Lennart, 52072 Aachen (DE)
(74) Vertreter: CLAAS Gruppe

(57) **Zusammenfassung**

Die Erfindung betrifft ein landwirtschaftliches Assistenzsystem mit einem Fahrerassistenzsystem (2) zur Ansteuerung einer insbesondere als Traktor ausgestalteten Zugmaschine (3) und/oder eines Anbaugeräts (4) eines landwirtschaftlichen Gespanns (5), wobei das landwirtschaftliche Assistenzsystem (1) Steuerparameter für die Zugmaschine (3), insbesondere für eine Maschinensteuerung (6) der Zugmaschine (3), und/oder für das Anbaugerät (4), insbesondere für eine Gerätesteuerung (10) des Anbaugerätes (4), erzeugt, wobei das Fahrerassistenzsystem (2) eine Ein-/Ausgabeeinheit (11) für den Dialog mit einem Benutzer (B) aufweist, wobei das landwirtschaftliche Assistenzsystem (1), insbesondere das Fahrerassistenzsystem (2), einen Regelinterpreter (12) aufweist, der die Steuerparameter erzeugt, indem er Regeln von Regelwerken (13) abarbeitet. Es wird vorgeschlagen, dass das landwirtschaftliche Assistenzsystem (1) einen Regelgenerator (17) zum Erstellen und/oder Editieren der Regelwerke (13) aufweist, dass der Regelgenerator (17) eine Benutzerschnittstelle (18) bereitstellt, dass die Regelwerke (13) mittels des Regelgenerators (17) über die Benutzerschnittstelle (18) von mehreren Benutzern (B), insbesondere browserbasiert, erstellbar und/oder editierbar sind und dass der Regelgenerator (17) eine Benutzerverwaltung aufweist, in der Zugriffsrechte einzelner Benutzer (B) auf zumindest einen Teil der Regelwerke (13) definiert sind.

## Beschreibung

Die vorliegende Erfindung betrifft ein landwirtschaftliches Assistenzsystem gemäß dem Oberbegriff von Anspruch 1.

Der bekannte Stand der Technik (DE 10 2017 130 146 A1), von dem die Erfindung ausgeht, betrifft ein landwirtschaftliches Assistenzsystem gemäß dem Oberbegriff von Anspruch 1.

Anwendung findet das in Rede stehende Assistenzsystem bei der Ansteuerung einer Zugmaschine und/oder eines Anbaugeräts, die insbesondere ein landwirtschaftliches Gespann bilden. Die Zugmaschine ist hier und vorzugsweise ein Traktor. Das Anbaugerät kann an die Zugmaschine angekoppelt sein. Dabei kann ein und derselbe Traktor mit den unterschiedlichsten Anbaugeräten kombiniert werden. Bei solchen Anbaugeräten handelt es sich beispielsweise um Mähwerke, Ballenpressen, Schwader, Wender, Bodenbearbeitungsgeräte, Düngerstreuer oder dergleichen.

Für eine optimale Ansteuerung des landwirtschaftlichen Gespanns unter bestimmten Optimierungskriterien wird der Zugmaschine ein Fahrerassistenzsystem zugeordnet. Bei solchen Fahrerassistenzsystemen ist erkannt worden, dass für eine optimierte Ansteuerung des Gespanns die Kenntnis bestimmter Eigenschaften der Zugmaschine einerseits und des Anbaugeräts andererseits unverzichtbar ist.

Es sind Fahrerassistenzsysteme bekannt, bei denen Steuerparameter für die Zugmaschine und/oder für das Anbaugerät erzeugt werden, wobei das Fahrerassistenzsystem eine Ein-/Ausgabeeinheit für den Dialog mit dem Bediener aufweist. Die erzeugten Steuerparameter werden vorzugsweise an eine Maschinensteuerung der Zugmaschine und/oder an eine Gerätesteuerung des Anbaugeräts, sofern vorhanden, geleitet. Eine Änderung der Steuerparameter bewirkt dann eine entsprechende Änderung der Maschineneinstellungen und/oder Geräteeinstellungen. Die Änderung der Steuerparameter kann vollautomatisch oder über eine Bedienereingabe vorgesehen sein. Im letztgenannten Fall kann der Bediener beispielsweise über die Ein-/Ausgabeeinheit aufgefordert werden, entsprechende Eingaben vorzunehmen.

Es sind Fahrerassistenzsysteme bekannt, die eine regelbasierte Steuerung aufweisen. Solche regelbasierten Steuersysteme weisen einen generischen Regelinterpreter auf, der zur Abarbeitung der Regeln eines Regelwerks eingerichtet ist. Die Regeln gehen dabei vorzugsweise auf einfache "Wenn-Dann-Bedingungen" zurück. Zur Abarbeitung des Regelwerks werden dem Regelinterpreter Eingangsparameter zugeführt, auf die der Regelinterpreter die Regeln des Regelwerks anwendet. Das Ergebnis sind Ausgangsparameter, die sich aus den Eingangsparametern einerseits und dem Regelwerk andererseits ergeben. Die Regeln des Regelwerks sind von einem standardisierten Format, so dass gänzlich unbekannte Regeln von dem Regelinterpreter in reproduzierbarer Weise abgearbeitet werden können.

Dabei handelt es sich bei dem Regelinterpreter um eine generische Einheit, die unabhängig von der Ausgestaltung von Zugmaschine und Anbaugerät ausgestaltet ist. Das Regelwerk dagegen repräsentiert die zugmaschinenspezifischen und/oder anbaugerätespezifischen Eigenschaften.

Bei dem bekannten Stand der Technik werden die Regelwerke als bekannt vorausgesetzt. Es hat sich jedoch herausgestellt, dass sowohl ein zentrales Erstellen der Regelwerke als auch ein einzelnes gezieltes Editieren der Regelwerke durch einzelne Benutzer nicht ausreicht, um die hohe Komplexität unterschiedlicher landwirtschaftlicher Gespanne optimal zu beherrschen.

Der Erfindung liegt das Problem zugrunde, das bekannte landwirtschaftliche Assistenzsystem derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, dass die für die Regelwerke benötigte Expertise bei einer Vielzahl von Benutzern und Herstellern von Zugmaschinen und Anbaugeräten dezentral verteilt ist. Um nun eine optimierte Steuerung der Zugmaschinen und/oder Anbaugeräte zu ermöglichen, wird vorgeschlagen, dieses Wissen zu sammeln, in Regelwerke zu überführen und anzuwenden. Dabei ist zu berücksichtigen, dass eine Vielzahl von Interessen der einzelnen Benutzer miteinander kollidieren können und das benötigte Wissen somit nicht frei zur Verfügung steht. Um dennoch die Steuerung des landwirtschaftlichen Gespanns optimieren zu können, wird eine Benutzerverwaltung, in der Zugriffsrechte auf dieses Wissen in Form von Regelwerken geregelt sind, vorgeschlagen.

Im Einzelnen wird vorgeschlagen, dass das landwirtschaftliche Assistenzsystem einen Regelgenerator zum Erstellen und/oder Editieren der Regelwerke aufweist, dass der Regelgenerator eine Benutzerschnittstelle bereitstellt, dass die Regelwerke mittels des Regelgenerators über die Benutzerschnittstelle von mehreren Benutzern, insbesondere browserbasiert, erstellbar und/oder editierbar sind und dass der Regelgenerator eine Benutzerverwaltung aufweist, in der Zugriffsrechte einzelner Benutzer auf zumindest einen Teil der Regelwerke definiert sind.

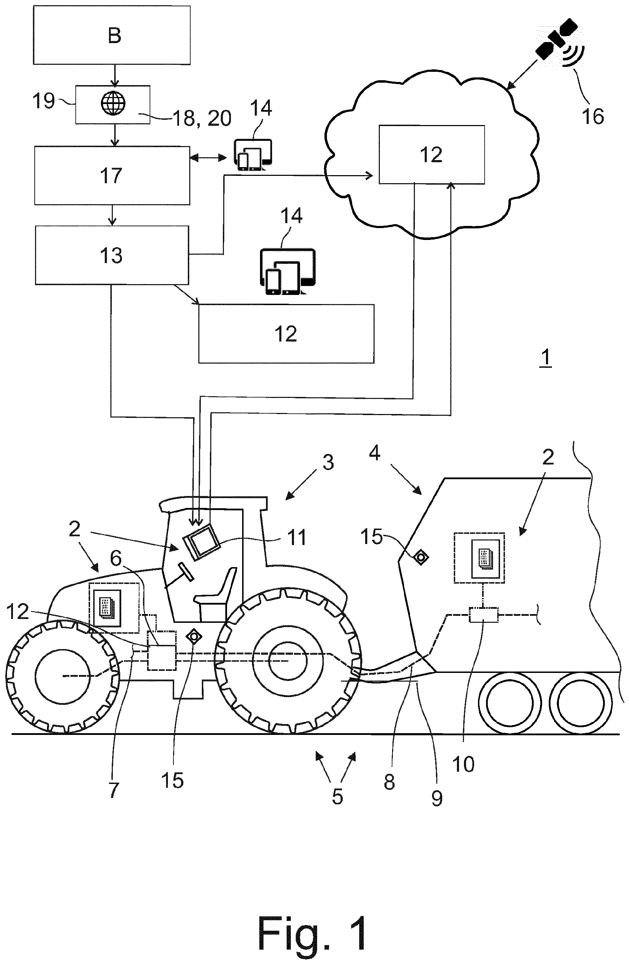

Im Folgenden wird die Erfindung anhand einer lediglich Ausführungsbeispiele darstellenden Zeichnung näher erläutert. In der Zeichnung zeigt
- Fig. 1: eine schematische Darstellung eines landwirtschaftlichen Gespanns mit einem vorschlagsgemäßen landwirtschaftlichen Assistenzsystem.

Das vorschlagsgemäße landwirtschaftliche Assistenzsystem 1 weist ein Fahrerassistenzsystem 2 auf. Das Fahrerassistenzsystem 2 dient der Ansteuerung einer insbesondere als Traktor ausgestalteten Zugmaschine 3 und/oder eines Anbaugeräts 4 eines landwirtschaftlichen Gespanns 5.

Bei dem Anbaugerät 4 kann es sich um jedwedes Anbaugerät 4 handeln, das mit einer Zugmaschine 3 koppelbar ist. Bei dem dargestellten Ausführungsbeispiel handelt es sich bei dem Anbaugerät 4 um eine Ballenpresse, mit der sich Heu, Stroh oder dergleichen zu Ballen pressen lässt.

Die dargestellte Zugmaschine 3 weist eine Maschinensteuerung 6 auf, mit der sich Maschineneinstellungen wie die Motordrehzahl des Zugmaschinenmotors 7, die Drehzahl bzw. das Drehmoment der Zapfwelle 8 der Zugmaschine 3, die Heberhöhe eines Heckkrafthebers 9 oder dergleichen verändern lassen. Der Maschinensteuerung 6 werden die von dem landwirtschaftlichen Assistenzsystem 1 erzeugten Steuerparameter zugeführt.

Hier und vorzugsweise ist auch das Anbaugerät 4 mit einer eigenen Steuerung, hier einer Gerätesteuerung 10, ausgestattet, der die vom landwirtschaftlichen Assistenzsystem 1 erzeugten Steuerparameter zugeführt werden. Diese Zuführung der Steuerparameter kann vollautomatisch oder über einen Bediener B, beispielsweise, indem der Bediener B die Änderung von Steuerparametern über eine Ein-/Ausgabeeinheit 11 freigibt oder über die Ein-/Ausgabeeinheit 11 eingibt, vollzogen werden.

Das in Fig. 1 dargestellte und insoweit bevorzugte Ausführungsbeispiel betrifft ein landwirtschaftliches Assistenzsystem 1 mit einem Fahrerassistenzsystem 2 zur Ansteuerung einer insbesondere als Traktor ausgestalteten Zugmaschine 3 und/oder eines Anbaugeräts 4 eines landwirtschaftlichen Gespanns 5, wobei das landwirtschaftliche Assistenzsystem 1 Steuerparameter für die Zugmaschine 3, insbesondere für eine Maschinensteuerung 6 der Zugmaschine 3, und/oder für das Anbaugerät 4, insbesondere für eine Gerätesteuerung 10 des Anbaugerätes 4, erzeugt, wobei das Fahrerassistenzsystem 2 eine Ein-/Ausgabeeinheit 11 für den Dialog mit einem Benutzer B aufweist, wobei das landwirtschaftliche Assistenzsystem 1, insbesondere das Fahrerassistenzsystem 2, einen Regelinterpreter 12 aufweist, der die Steuerparameter erzeugt, indem er Regeln von Regelwerken 13 abarbeitet.

Die Ein-/Ausgabeeinheit 11 kann hier und vorzugsweise an der Zugmaschine 3 angeordnet sein. Genauso vorteilhaft kann sie jedoch auch durch ein mobiles Gerät 14 gebildet werden. Das Fahrerassistenzsystem 2 ist, wie dargestellt, hier und vorzugsweise an dem landwirtschaftlichen Gespann 5, insbesondere an der Zugmaschine 4, angeordnet.

Der Regelinterpreter 12 erzeugt die Steuerparameter aus Regelwerken 13, die ganz unterschiedliche Regeln beinhalten können. Diese Regeln können die Zugmaschine 3, das Anbaugerät 4 und/oder das landwirtschaftliche Gespann 5 betreffen. Sie können unterschiedliche Eingangsdaten aus Sensoren 15 und externen Quellen 16 berücksichtigen und unterschiedliche Komplexitäten aufweisen.

Wesentlich ist nun, dass das landwirtschaftliche Assistenzsystem 1 einen Regelgenerator 17 zum Erstellen und/oder Editieren der Regelwerke 13 aufweist, dass der Regelgenerator 17 eine Benutzerschnittstelle 18 bereitstellt, dass die Regelwerke 13 mittels des Regelgenerators 17 über die Benutzerschnittstelle 18 von mehreren Benutzern B, insbesondere browserbasiert, erstellbar und/oder editierbar sind und dass der Regelgenerator 17 eine Benutzerverwaltung aufweist, in der Zugriffsrechte einzelner Benutzer B auf zumindest einen Teil der Regelwerke 13 definiert sind.

Der Regelgenerator 17 dient hier also ganz allgemein dazu, die Regelwerke 13 zu erstellen und/oder zu editieren und dem Regelinterpreter 12 zur Verfügung zu stellen. Die Benutzerschnittstelle 18 ist hier und vorzugsweise eine Website, die mittels eines normalen Internetbrowsers aufgerufen werden kann. Die Benutzerverwaltung regelt hier und vorzugsweise den Zugriff der jeweiligen Benutzer B auf die Regelwerke 13. Es kann vorgesehen sein, dass die Benutzer B jeweils eigene und/oder gemeinsame Regelwerke 13 erstellen und/oder editieren können. Hier und vorzugsweise melden die Benutzer B sich beispielsweise mit einem Passwort und einem Benutzernamen über die Benutzerschnittstelle 18 bei dem Regelgenerator 17 an und können dann die Regelwerke 13, auf die sie zugreifen dürfen, editieren und weitere Regelwerke 13 erstellen. Sie können hier und vorzugsweise Zugriffsrechte auf einen Teil ihrer Regelwerke 13 festlegen, um anderen Benutzern B den Zugriff zu ermöglichen und wieder anderen zu verwehren. Es kann auch vorgesehen sein, dass sie Regelwerke 13 veröffentlichen oder verkaufen können. Durch diese Art der Zusammenarbeit wird es den Benutzern B ermöglicht, ihre landwirtschaftlichen Gespanne 5 auf Basis des Wissens vieler anderer Benutzer B zu optimieren. Die Zugriffsrechte sind hier und vorzugsweise in einer Datenbank abgelegt.

Bei dem in den Figuren dargestellten und insoweit bevorzugten Ausführungsbeispiel ist ferner vorgesehen, dass die Regelwerke 13 von dem Regelgenerator 17 an den Regelinterpreter 12 übertragen werden, vorzugsweise, dass die Regelwerke 13 von dem Regelinterpreter 12 in einem Dialog mit einem Benutzer B abgearbeitet werden, weiter vorzugsweise, dass ein einem Regelwerk 13 zugeordneter Dialog mittels des Regelgenerators 17 über die Benutzerschnittstelle 18 von den Benutzern B erstellbar und/oder editierbar ist.

Unter einem Dialog mit dem Benutzer B ist hier das Anzeigen von Informationen an den Benutzer B inklusive einer Frage, einer Auswahlmöglichkeit, einer Eingabemöglichkeit oder dergleichen zu verstehen, auf das, hier und vorzugsweise eine standardisierte, Antwort des Benutzers B erfolgt. Diese Antwort wird dann im Rahmen der Abarbeitung des Regelwerks 13 von dem Regelinterpreter 12 verwendet. Hier und vorzugsweise umfasst der Dialog mehrere derartige Benutzereingaben. Der Regelinterpreter 12 ist eine generische Einheit, die hier und vorzugsweise ortsunabhängig auf prinzipiell beliebiger Steuerungshardware ausführbar ist. Es können auch mehrere Regelinterpreter 12 vorhanden sein.

Weiter ist hier und vorzugsweise vorgesehen, dass eine erste Gruppe von Benutzern B von einer zweiten Gruppe von Benutzern B erstellte Regelwerke 13 von dem Regelgenerator 17 an Regelinterpreter 12 ihnen zugeordneter landwirtschaftlicher Gespanne 5 übertragen kann, vorzugsweise, dass die erste Gruppe von Benutzern B die Regelwerke 13 editieren kann, und/oder, dass der zweiten Gruppe von Benutzern B ebenfalls landwirtschaftliche Gespanne 5 zugeordnet sind, und/oder, dass ein Benutzer B, insbesondere selbst erstellte oder editierte, Regelwerke 13 über die Benutzerverwaltung für andere Benutzer B freigeben kann.

Die Zuordnung der landwirtschaftlichen Gespanne 5 zu den Benutzern B betrifft üblicher Weise ein Besitzverhältnis. Es kann sich jedoch auch um eine Benutzung oder eine anderweitige Zuordnung handeln. Hier und vorzugsweise ist die Zuordnung in einer Datenbank des landwirtschaftlichen Assistenzsystems 1 abgelegt und darüber definiert. Grundsätzlich können auch übergeordnete Zuordnungen vorgesehen sein, beispielsweise über Kooperationen zwischen Benutzern B. Hier und vorzugsweise sind diese Zuordnungen alle in der Datenbank des landwirtschaftlichen Assistenzsystems 1 definiert und auch nur in dem definierten Rahmen für die Benutzerverwaltung relevant. Der Benutzer B kann so beispielsweise seine landwirtschaftlichen Gespanne 5 mit Regelwerken 13 anderer Benutzer B steuern.

Dafür kann der Regelgenerator 17 die Regelwerke 13 nach Bedarf dem Regelinterpreter 12, vorzugsweise unabhängig von dessen Ausführungsort, zur Verfügung stellen.

Darüber hinaus ist hier und vorzugsweise vorgesehen, dass das landwirtschaftliche Assistenzsystem 1 eine Serverplattform 19 aufweist, dass die Serverplattform 19 den Regelgenerator 17 ausführt, und dass die Serverplattform 19 von einem dem landwirtschaftlichen Gespann 5 zugeordneten Benutzer B, insbesondere browserbasiert, zum Erstellen und/oder Editieren der Regelwerke 13, nutzbar ist.

Die Serverplattform 19 umfasst zumindest Hardware und Rechenkapazitäten zur Ausführung des Regelgenerators 17.

Darüber hinaus ist hier und vorzugsweise vorgesehen, dass die Serverplattform 19 ein Webinterface 20 als Benutzerschnittstelle 18 für den Regelgenerator 17 zur Verfügung stellt, vorzugsweise, dass über das Webinterface 20 Ablaufdiagramme zu den Regelwerken 13 angezeigt werden können, und/oder, dass die Serverplattform 19 eine Datenbank umfasst, die insbesondere Textbausteine für den Regelwerken 13 zugeordnete Dialoge umfasst, die vorzugsweise bei dem Erstellen oder Editieren des Dialogs von dem Benutzer B verwendet werden können, und/oder, dass die Serverplattform 19 eine Vorschaufunktion für die zugeordneten Dialoge aufweist.

Das Webinterface 20 ist hier und vorzugsweise eine Website mit Zugriff auf eine Datenbank der Serverplattform 19. Mit dieser lassen sich die Regelwerke 13 und insbesondere die Dialoge hier und vorzugsweise in großem Umfang editieren und erstellen. Dabei können Drag- und Drop-Funktionalitäten, Verschlüsselungsmöglichkeiten, Möglichkeiten zum Speichern, Laden, Duplizieren, Referenzieren und Veröffentlichen, Vorschaufunktionen und dergleichen vorgesehen sein.

### Bezugszeichenliste

- 1: Landwirtschaftliches Assistenzsystem
- 2: Fahrerassistenzsystem
- 3: Zugmaschine
- 4: Anbaugerät
- 5: Landwirtschaftliches Gespann
- 6: Maschinensteuerung
- 7: Zugmaschinenmotor
- 8: Zapfwelle
- 9: Heckkraftheber
- 10: Gerätesteuerung
- 11: Ein-/Ausgabeeinheit
- 12: Regelinterpreter
- 13: Regelwerk
- 14: Mobiles Gerät
- 15: Sensoren
- 16: Externe Quellen
- 17: Regelgenerator
- 18: Benutzerschnittstelle
- 19: Serverplattform
- 20: Webinterface
- B: Benutzer

## Patentansprüche

1. Landwirtschaftliches Assistenzsystem mit einem Fahrerassistenzsystem (2) zur Ansteuerung einer insbesondere als Traktor ausgestalteten Zugmaschine (3) und/oder eines Anbaugeräts (4) eines landwirtschaftlichen Gespanns (5), wobei das landwirtschaftliche Assistenzsystem (1) Steuerparameter für die Zugmaschine (3), insbesondere für eine Maschinensteuerung (6) der Zugmaschine (3), und/oder für das Anbaugerät (4), insbesondere für eine Gerätesteuerung (10) des Anbaugerätes (4), erzeugt, wobei das Fahrerassistenzsystem (2) eine Ein-/Ausgabeeinheit (11) für den Dialog mit einem Benutzer (B) aufweist,
wobei das landwirtschaftliche Assistenzsystem (1), insbesondere das Fahrerassistenzsystem (2), einen Regelinterpreter (12) aufweist, der die Steuerparameter erzeugt, indem er Regeln von Regelwerken (13) abarbeitet,
**dadurch gekennzeichnet,**
**dass** das landwirtschaftliche Assistenzsystem (1) einen Regelgenerator (17) zum Erstellen und/oder Editieren der Regelwerke (13) aufweist, dass der Regelgenerator (17) eine Benutzerschnittstelle (18) bereitstellt, dass die Regelwerke (13) mittels des Regelgenerators (17) über die Benutzerschnittstelle (18) von mehreren Benutzern (B), insbesondere browserbasiert, erstellbar und/oder editierbar sind und dass der Regelgenerator (17) eine Benutzerverwaltung aufweist, in der Zugriffsrechte einzelner Benutzer (B) auf zumindest einen Teil der Regelwerke (13) definiert sind.

2. Landwirtschaftliches Assistenzsystem nach Anspruch 1, **dadurch gekennzeichnet, dass** die Regelwerke (13) von dem Regelgenerator (17) an den Regelinterpreter (12) übertragen werden, vorzugsweise, dass die Regelwerke (13) von dem Regelinterpreter (12) in einem Dialog mit einem Benutzer (B) abgearbeitet werden, weiter vorzugsweise, dass ein einem Regelwerk (13) zugeordneter Dialog mittels des Regelgenerators (17) über die Benutzerschnittstelle (18) von den Benutzern (B) erstellbar und/oder editierbar ist.

3. Landwirtschaftliches Assistenzsystem nach Anspruch 1 oder 2, **dadurch gekennzeichnet, dass** eine erste Gruppe von Benutzern (B) von einer zweiten Gruppe von Benutzern (B) erstellte Regelwerke (13) von dem Regelgenerator (17) an Regelinterpreter (12) ihnen zugeordneter landwirtschaftlicher Gespanne (5) übertragen kann, vorzugsweise, dass die erste Gruppe von Benutzern (B) die Regelwerke editieren kann, und/oder, dass der zweiten Gruppe von Benutzern (B) ebenfalls landwirtschaftliche Gespanne (5) zugeordnet sind, und/oder, dass ein Benutzer (B), insbesondere selbst erstellte oder editierte, Regelwerke (13) über die Benutzerverwaltung für andere Benutzern (B) freigeben kann.

4. Landwirtschaftliches Assistenzsystem nach einem der vorhergehenden Ansprüche, **dadurch gekennzeichnet, dass** das landwirtschaftliche Assistenzsystem (1) eine Serverplattform (19) aufweist, dass die Serverplattform (19) den Regelgenerator (17) ausführt, und dass die Serverplattform (19) von einem dem landwirtschaftlichen Gespann (5) zugeordneten Benutzer (B), insbesondere browserbasiert, zum Erstellen und/oder Editieren der Regelwerke (13), nutzbar ist.

5. Landwirtschaftliches Assistenzsystem nach Anspruch 4, **dadurch gekennzeichnet, dass** die Serverplattform (19) ein Webinterface (20) als Benutzerschnittstelle (18) für den Regelgenerator (17) zur Verfügung stellt, vorzugsweise, dass über das Webinterface (20) Ablaufdiagramme zu den Regelwerken (13) angezeigt werden können, und/oder, dass die Serverplattform (19) eine Datenbank umfasst, die insbesondere Textbausteine für den Regelwerken (13) zugeordnete Dialoge umfasst, die vorzugsweise bei dem Erstellen oder Editieren des Dialogs von dem Benutzer (B) verwendet werden können, und/oder, dass die Serverplattform (19) eine Vorschaufunktion für die zugeordneten Dialoge aufweist.
